(19)

Europäisches
Patentamt
European
Patent Office
Office européen
des brevets

(11) **EP 4 095 734 A1**

(12) **EUROPEAN PATENT APPLICATION**

(43) Date of publication:
**30.11.2022   Bulletin 2022/48**

(21) Application number: **21176307.3**

(22) Date of filing: **27.05.2021**

(51) International Patent Classification (IPC):
**G06F 30/20** $^{(2020.01)}$      **G06F 30/15** $^{(2020.01)}$
**G06F 30/27** $^{(2020.01)}$      **G06F 111/06** $^{(2020.01)}$

(52) Cooperative Patent Classification (CPC):
**G06F 30/20; G06F 30/15; G06F 30/27;**
G06F 2111/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **paretos GmbH**
**69115 Heidelberg (DE)**

(72) Inventors:
• **Palm, Herbert**
  **69115 Heidelberg (DE)**
• **Rang, Fabian**
  **69115 Heidelberg (DE)**
• **Heilig, Thorsten**
  **69115 Heidelberg (DE)**

(74) Representative: **Grünecker Patent- und**
**Rechtsanwälte**
**PartG mbB**
**Leopoldstraße 4**
**80802 München (DE)**

(54) **METHOD AND SYSTEM FOR DESIGNING A COMPLEX SYSTEM**

(57)    The present disclosure relates to multi-objective optimization of complex technical systems. A method of designing a Pareto-optimal layout of a system includes processing (110) input data relating to defining a layout space of layout parameters, a target space of target parameters, and constraints in the layout parameters and the target parameters, determining (120) one or more sets of layout parameter values, each set specifying a layout configuration of the system to be modeled, receiving (130) objective responses for the system having layout configurations specified by the one or more sets of layout parameter values, wherein each objective response corresponds to a target parameter value achieved by the system when having a layout configuration specified by one of the sets of layout parameter values, applying (150) multi-objective optimization with respect to the target parameters to determine one or more further sets of layout parameter values, receiving (130) objective responses for the system having layout configurations specified by the one or more further sets of layout parameter values, repeating the steps of applying multi-objective optimization and receiving respective objective responses until an abort criterion is met, and providing (160) a user interface for Pareto-optimal design of the system to be modeled, the user interface configured for selecting a specific layout configuration on basis of visualizing objective trade-offs inferred from the objective responses for the respective sets of layout parameter values, wherein the trade-offs are inferred from the objective responses based on determining Pareto-optimal points.

FIG. 2

EP 4 095 734 A1

## Description

**Technical field**

The present disclosure relates to methods and systems for multi-objective optimization of complex technical systems.

**Background**

Engineering design of a technical system is the activity of shaping a solution for a design of the technical system in its fundamental aspects. Designing the technical system in particular includes choosing a layout for the technical system, i.e. deciding on parameter values. Often, shaping a solution for the technical system is a complex problem that is characterized by a dynamically changing topology and cause-effect relations that are not fully predictable a priori. Further, engineering design problems often aim at optimizing more than one target dimension and hence correspond to multi-objective optimization problems.

Such multi-objective optimization problems do not have a single optimal solution but require consideration of trade-offs amongst the different target parameters that measure the multiple objectives. Multi-objective optimization problems can be characterized by a plurality of Pareto-optimal solutions which form Pareto fronts. Pareto-optimal solutions are layouts of the technical system for which there is no alternative layout that achieves better objective responses in one of the target parameters without reducing the objective response in another target parameter. Identifying Pareto fronts for the layout of the technical system requires performing the challenging task of quantifying objective responses for all potential parameter values of layout configurations.

Exploring the space of possible solutions may include a first stage of defining design layouts by topological and parametric design variables $d_n$. Each design vector d is a set of one or more sets of layout parameter values $d=(d_1, d2, ..., d_i)$ that spans an i-dimensional design space D. Each design vector d represents an individual design layout. Further, use cases may be defined by use case vectors $u =(u_1, u_2, ..., u_j)$ spanning a j-dimensional use case space U. Each use case vector u represents an individual use case. A k-dimensional target space T characterizes target parameter values for evaluation of design alternatives. A target vector $t \in T$ represents an achievement measure of a multi-criterial target. Design space D, use case space U and a target indicator space T may be taken to define hyper space $H = D \times U \times T$. This approach based on the hyper space H comprises allows efficiently exploring the technological territory defined by D and U.

Efficiently exploring the space of possible solutions may then be facilitated by combining methods of virtual prototyping with methods for design of virtual experiments and statistical learning. Virtual prototyping allows early feedback on objective responses of the system with specified layout configuration, while statistical learning allows to systematically build up the space of potential layout alternatives in the complex space of layout configurations, to allow efficiently quantifying target indicator trade-offs and Pareto-optimal layout configurations.

Summary

Approaches of the state of the art mostly rely on employing a tool chain including several non-integrated software tools. A modelling and simulation tool may be employed to reveal quantitative target values for selected specific layouts. A distinct data analytics tool may be employed for comparing a multitude of simulated layout alternatives and visualizing target indicator trade-offs. A data analytics business tool may be employed for comparing simulation results with business targets.

These tools usually cannot be employed to explore the full design potential of a system under consideration. This missing technical knowledge on solutions within the complex problem's habitat causes an incremental, iterative learning, which entails that the process may not necessarily lead to a global maximum of effectiveness in the layout parameters. Further, the process may require many iteration loops, i.e. the resulting design may not be achieved efficiently.

The present disclosure addresses these issues that originate in a lack of knowledge about the true design potential by disclosing systems and methods that provide integrated technical knowledge.

The present invention discloses a computer-implemented-method for designing a Pareto-optimal layout of a system to be modeled. The method comprises processing input data relating to defining a layout space of layout parameters of a system to be modeled, a target space of target parameters of the system, and constraints in the layout parameters and the target parameters. The method proceeds to determining one or more sets of layout parameter values, each set specifying a layout configuration of the system to be modeled. Further, objective responses for the system having layout configurations specified by the one or more sets of layout parameter values are received, wherein each objective response corresponds to a target parameter value achieved by the system when having a layout configuration specified by one of the sets of layout parameter values.

The method also includes applying multi-objective optimization with respect to the target parameters to determine one or more further sets of layout parameter values, receiving objective responses for the system having layout configurations specified by the one or more further sets of layout parameter values, and repeating the steps of applying multi-objective optimization to determine one or more consecutive further sets of layout parameter values and receiving respective objective responses until an abort criterion is met. The method further comprises providing a user interface for Pareto-optimal design of the system to be modeled, the user interface configured for selecting a specific layout configuration on basis of visualizing objective trade-offs inferred from the objective responses for the respective one or more sets of layout parameter values, wherein the trade-offs are inferred from the objective responses based on determining Pareto-optimal points.

According to an embodiment, the method also comprises building a surrogate model that approximates a relation between the target parameter and the layout parameters, wherein determining the one or more consecutive further sets of layout parameter values is based on employing the surrogate model.

In an embodiment, determining the sets of one or more layout parameter values may be based on applying a space-filling algorithm. Further, applying multi-objective optimization to determine the one or more second sets and consecutive further sets, respectively, of layout parameter values is based on employing all previously received objective responses.

According to an aspect, the layout space corresponds to a Cartesian product of a design space of design parameters and a use case space of use case parameters, and wherein the design parameters and the use case parameters correspond to the layout parameters.

According to embodiments, the method may further comprise sending the sets of layout parameter values, the further sets of layout parameter values, and each of the consecutive further sets of layout parameter values to one or more remote system modelling modules for providing the respective objective responses. The method may also comprise determining that the abort criterion is met by determining that a predetermined level of convergence is reached.

According to another embodiment, the method further comprises performing a statistical test that a relation between the layout parameters and the target parameters inferred from the objective responses achieves a predetermined significance level, and wherein the user interface instructs the user to refine the input data if the relation does not achieve the predetermined significance level.

According to an embodiment, the system to be modeled may be neural network for pattern recognition, wherein the layout parameters comprise a network depth, a number of input features, and a kernel size, and wherein the target parameters comprise a precision, a recall, and a computing time. According to another embodiment, the system to be modeled is an electric power generation system, wherein the layout parameters comprise a peak power and a battery capacity.

According to another embodiment, the system to be modeled may be an electric vehicle, wherein the layout parameters comprise a peak motor power, a battery capacity, a number of gears, a gear ratio, and an upshift threshold, and wherein the target parameters comprise a total range of the vehicle and an acceleration time of the vehicle.

According to yet another embodiment, the system to be modeled is a drive train of an electric vehicle, wherein the design parameters comprise a peak motor power, a battery capacity, a gear ratio, and an upshift threshold, wherein the target parameters comprise an energy consumption of the vehicle and an acceleration time of the vehicle on a test track, and wherein the use case parameters comprise a length of the test track or a scaling factor of a length of the test track.

In embodiments, the calculated surrogate model may be employed to calculate a continuous Pareto front over the Pareto-optimal points, and visualizing objective trade-offs comprises displaying the continuous Pareto front. Further, the method may comprise performing a statistical test that the surrogate model achieves a predetermined significance level, and wherein the user interface instructs the user to choose a different model family for building the surrogate model if it is determined that the predetermined significance level is not achieved.

According to an aspect, the user interface is configured for preparing output data reflecting layout parameter sensitivities based on analyzing a relation between the objective responses and the layout parameters. The sensitivities determined from the surrogate model may capture correlation of several of the layout parameters with one of the target parameters.

According to other embodiments, a computing system for designing a Pareto-optimal layout of a system to be modeled is provided. The computing system comprises a processor, a data handling module configured to handle data flow between modules, one or more system modelling modules, a multi-objective optimization module, and a decision management module.

The one or more system modelling modules may be configured to model a system with specified layout configurations, wherein each layout configuration is specified by a set of layout parameter values, wherein each system modelling module is configured to deliver objective responses for a layout configuration, wherein each objective response corresponds to a target parameter achieved by the system having the layout configuration specified by the set of layout parameter values. The multi-objective optimization module may be configured to employ the objective responses to determine further sets of layout parameter values to be modelled by the modelling modules. The decision management module includes a graphical user interface for Pareto-optimal design of the system, wherein the decision management module may be configured to visualize objective trade-offs inferred from the objective responses for the layout parameters, wherein the trade-offs inferred are inferred from the objective responses based on determining Pareto-optimal points. The decision management module may further be configured to repeatedly present to the user, in each repetition, further sets of layout parameter values and corresponding objective results, wherein the further sets of layout parameter values are determined by the multi-objective optimization module, and the corresponding target parameters are delivered from the system modelling modules, until the user makes a selection of a specific layout configuration having a set of corresponding layout parameter values.

According to an aspect, each system modelling module is configured to deliver the objective result for a layout configuration by simulating the system having a layout configuration specified by the set of one or more layout parameter values.

According to other aspects, the data handling module is configured to retrieve the sets of layout parameters from the multi-objective optimization module by employing an API exposed by the multi-objective optimization module.

According to yet another aspect, the one or more system modelling modules comprise several system modelling modules configured to be executed in parallel. Further, the system may comprise a definition module configured to process user input related to definitions of a layout space of the system, a target space of the system, and constraints of the system, wherein the layout space comprises the layout parameters, the target space comprises the target parameters, and the constraints cover required limitations in the layout parameters and the target parameters.

According to yet another embodiment, a computer program product for designing a Pareto-optimal layout of a system to be modeled, is provided. The computer program product comprises a non-transitory computer-readable medium encoded with program instructions which, when executed by at least one processor, cause a processor to perform operations according to the previously described methods.

Brief description of the figures

Figure 1 illustrates a flow chart of a method for Pareto-optimal design;
Figure 2 illustrates a system for Pareto-optimal design;
Figure 3 illustrates a graphical user interface for Pareto-optimal design; and
Figure 4 illustrates an example computing system in which the disclosed methods and systems may be implemented.

**Detailed description**

The present invention allows to systematically build the layout space of layout parameters of a technical system under consideration, define target parameters and gain knowledge on relations between the target parameters and the layout parameters for the system. The user is presented with a graphical user interface providing visualizations of the objective trade-offs and allowing selecting a specific layout configuration.

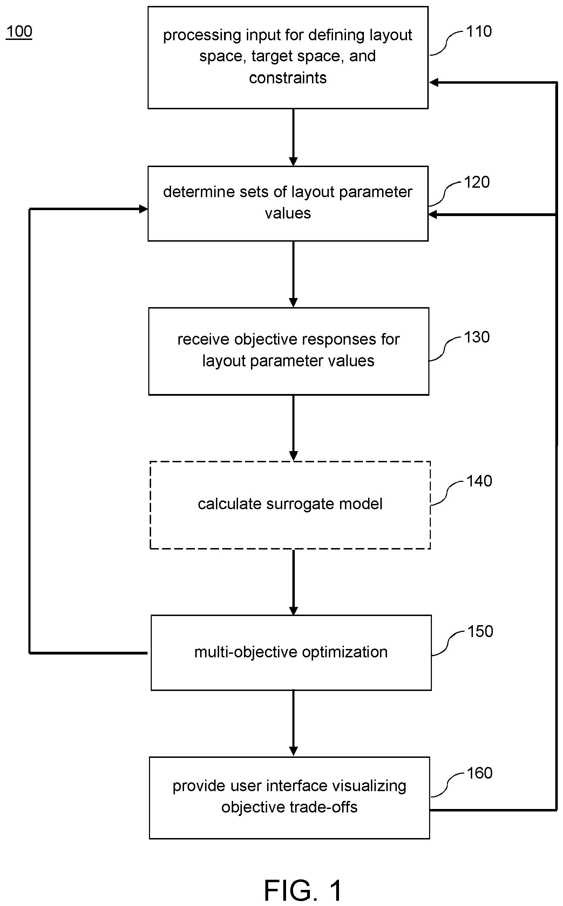

Figure 1 displays a flow chart of a method for designing a complex system. Before defining the layout space of the solution to be found, the logical structure of the solution has to be decided, by selecting physical or non-physical elements the solution is consisting of, and selecting interconnections between these elements. Then, the functional structure of the solution must be chosen based on selecting functional elements, such as elementary tasks or states the solution is consisting of and interconnections between the functional elements. For example, a flow diagram, activity diagram or state machine may be employed for deciding on a solution's functional topology and its comprising functional elements.

After deciding on the topology of the solution to be found, input for defining the layout space a system to be modelled is received in step 110 of method 100. The layout space of the system is then the space of parametrizations of the elements, the functional elements, and the respective interconnections. For example, when designing an electrical system, the layout space may include a parameter for the capacity of a battery element or a parameter for the peak power of a photovoltaic element.

The input data may be handled by a design space, target space, and constraint definition module of an integrated software tool. The input data may include all the information necessary to define the technical system allowing later modelling of the system via virtual experiments. The input data may comprise defining a first, second, third, etc. design parameter with respective parameter ranges.

Further input data defining a use case space U may optionally be received. The use case space covers use case variables, allowing optimizing the system for a plurality of use cases simultaneously. For example, when the system under consideration is an automobile, a use case parameter may be a length of distance covered by the vehicle, or, in another example, a lateral acceleration parameter $a_x$ and a circle radius r.

The layout space defined by the received input data may correspond to a Cartesian product of a design space of design parameters d and use case parameters u.

In step 110, further input data relating to defining a target space of target parameters of the system, and their ranges that should be considered, is received. Input data relating to defining a target space may, for example, define a first target parameter which should be minimized, and a second target indicator, which simultaneously should be maximized.

Finally, step 110 may further comprise receiving input data defining constraints in the layout parameters and the target parameters. For example, when the layout space comprises two design variables $d_1$ and $d_2$, a constraint may be $d_1 + d_2 < 10$. In embodiments, theses input data may be received via a graphical user interface that guides the user to submit the respective definitions.

Method 100 proceeds with step 120 of determining sets of layout parameter values to be evaluated. Each set of layout parameter values comprises one or more layout parameter values and defines a layout configuration of the technical system under study, in accordance with the selected system topology. The sets of layout parameter values may be determined based on calculating sets of layout parameter values that efficiently sample the defined layout space, for example based on applying a space filling algorithm.

Method 100 further comprises step 130 of receiving objective responses for the chosen sets of parameter values. The objective responses may be received from performing virtual experiments such as simulation of the system having the specified layout configuration. For example, the objective responses may be obtained from providing the chosen sets of parameter values to a remote simulation environment for simulating the corresponding layout configuration and receiving the objective responses determined at the remote simulation environment.

In an example of design of a fully electric vehicle focus may be put on design of the power train. The power train entails a layout parameter of a battery weight. The electric engine of the power train entails a layout parameter of a maximum power, while the gearbox of the power train entails layout parameters of a number of gears, a gear ratio and an upshift threshold. The target parameters may be chosen as the total range of the vehicle in kilometers and the acceleration time from zero to 50 km/h. In addition to these parametrizations of the single components, software parameters controlling the behavior of the gearshift module may be included in the layout space. The use case space may be used to define a track where the technical performance of the vehicle will be measured.

As a result of method steps 110, 120, 130, a sampling of the relation t(d,u) between target parameters and layout parameters is yielded. The relationship t(d,u) is in general not accessible analytically.

In embodiments, method 100 may comprise step 140 of calculating a surrogate model approximating t(d,u). The surrogate model may be based on a suitable function family $f_\alpha$ with parameter value $\alpha$

$$\hat{s} = f_\alpha(d, u) \approx t(d, u) \quad (1)$$

The surrogate model according to equation (1) maps the Euclidean product of design space D and use case space U to the target space T.

A surrogate model may be selected from a family of surrogate models selected by the user. For example, step 140 may comprise receiving a user selection of a family of surrogate models $f_\alpha$ and determining a value of $\alpha$ based on the observed relation between layout parameter values and objective responses. In embodiments, the families of surrogate models may comprise a function family based on radial basis functions and a function family based on Gaussian process regressors.

Method 100 further comprises step 150 of multi-objective optimization. Multi-objective optimization comprises identifying Pareto-objective trade-offs and corresponding design space parameter values. Step 150 of multi-objective optimization may be based on a genetic algorithm, or may be based on statistical learning approaches.

Multi-objective optimization may make use of a surrogate model as previously described. Depending on the optimization scenario, using a surrogate model may help achieving better results in less time, and accordingly increase effectiveness and efficiency of method 100. Simplified speaking, a purpose of multi-objective optimization is identifying a next round of data points to simulate. Accordingly, calculating and/or selecting the surrogate model has an effect on the quality of the optimization and on visualization of the Pareto fronts at a desired level of quality.

Step 150 of multi-objective optimization includes determining, based on evaluating an abort criterion, whether evaluation of further sets of layout parameters is necessary. The abort criterion may be based on a time limit or may be based on reaching a quality of results or convergence.

If it is determined that evaluation of further sets of layout parameters is necessary, method 100 repeats steps 120 and 130. The second iteration of steps 120 and 130 may be based on employing the results of the first iteration of steps 120 and 130 to achieve an efficient search strategy.

In particular, in the second iteration of step 120, the surrogate model may be employed to determine further sets of layout parameter values to be modelled. The received objective responses for the further sets of layout parameter values in turn allow refining the surrogate model which may be employed in yet another iteration of step 120 to determine yet further sets of layout parameter values to be modelled.

Hence, whereas a first iteration of step 120 employs a static sampling strategy with only static knowledge on the simulated system, each further iteration of step 120 may employ the successively refined surrogate model $\hat{s}$, so that a posteriori knowledge from the simulations is used for selection of the further layout parameter values. Hence, for example, the further sets of layout configurations to be made specifically in regions of the layout space where further modeling is necessary.

The dynamic search strategy according to steps 120, 130 and 140 hence takes into account the results of previous simulations for the selection of the next simulation and thus achieves both high effectiveness and high efficiency. The search strategy may be selected manually or may be automatically selected based on the problem under consideration.

If in step 150 it is decided that an evaluation of further sets of layout parameter values is not necessary, a user interface utilizing the trade-offs between the considered objectives may be rendered in step 160.

The user interface rendered in step 160 may display one or more graphs of Pareto Fronts, each Pareto front being inferred by the model objective optimization step. Each Pareto front captures a trade-off between two target parameters so that improving on a first target parameter is only possible by lowering achievement in a second target parameter.

When simultaneously considering use case parameters and design space parameters, the results may be projected to one of the use case parameters. In such a projection, maxima and minima of a target indicator under a variation of all other parameters may be considered to mark a best- or a worst-case situation for the technological potential of the system.

Based on the user interface rendered in step 160, a user may recognize that evaluation of further sets of layout parameter values is necessary to achieve a required accuracy of the Pareto front, for example. Hence, after step 160, another iteration of steps 120, 130, and 150 may be performed, refining the results.

Based on the user interface rendered in step 160, a user may also recognize that a redesign of the layout parameters such as the design parameters, use case parameters, or the target parameters is necessary. Hence, after step 160, the method may return to step 110.

The surrogate model $\hat{s}$ allows inferring Pareto-optimal solution alternatives according to

$$P_u = \{d \in D \mid \nexists d' \in D : f_\alpha(d, u) \prec f_\alpha(d', u)\} \quad (2)$$

Hence, according to equation (2), the surrogate model allows inferring a continuous Pareto front, efficiently quantifying target indicator trade-offs even in non-simulated sections of the layout space.

Therefore, in addition to using the surrogate model for selecting further layout parameter values to be modeled, the surrogate model $\hat{s}$ may be employed in step 160 to render the graph of the Pareto front as a continuous line. The surrogate model $\hat{s}$ may further be employed to calculate sensitivities that capture dependence of target parameters on layout parameters. The graphical user interface rendered in step 160 may further visualize the calculated sensitivities. Hence, the surrogate model may be employed to allow the user to identify which layout parameter influence the target parameters most strongly. Moreover, sensitivities determined from the surrogate model may also capture multiple correlation of several layout parameters on the target parameters.

Method 100 may further comprise testing a quality of fit between the surrogate model $\hat{s}$ and the observed relation t(d,u) of target parameters and the layout parameters. If the fit between the surrogate model $\hat{s}$ and the observed relation is not sufficient, the parameter $\alpha$ may be adjusted. Additionally, the graphical user interface may prompt the user to select another family of surrogate models $f_\alpha$.

The graphical user interface rendered in step 160 may also allow receiving a user selection of a specific layout configuration. In response to the user selection, the objective response for the specific layout configuration as predicted by the surrogate model may be verified by submitting the specific layout configuration to a system modeling module from which the objective responses are received.

Some or all of the method steps of method 100 described above may be implemented by a computer in that they are executed by (or using) a processor, a microprocessor, an electronic circuit or processing circuitry.

Below Table 1 illustrates code snippets for employing the method 100 for designing an electric vehicle:

Table 1

| Step | Results |
|---|---|
| 1 | Design(i) = (battery_size (i), engine_power(i), number_gears(i), gear_ratio(i), upshift_threshold(i))<br>   with battery_size (i) $\in$ {300, ...,800}<br>   with engine_power(i) $\in$ {20,..., 100}<br>   with number_gears(i) $\in$ {1,2}<br>   with gear_ratio(i) $\in$ {6,..., 12}<br>   with upshift_threshold(i) $\in$ (350,..., 450)<br>Objective(j) = (total_range(j), acceleration_time(j))<br>   with goal of $\max(\text{total\_range}(j) \in \mathbb{R})$<br>   with goal of $\min(\text{acceleration\_time}(j) \in \mathbb{R})$<br>Abort criterion: n_samples_max := 100 with i $\in$ {1,2,...,100} |
| 2 | Design(1) := (300 kg, 50kW, 1, 8, 400 rad/s) |
| 3 | Objective(1) = (500 km, 7 s) |
| 4 | f: f(Design) := Objective(Design) based on...<br>(Design(i), Objective(i)) samples i $\in$ {1}<br>optimize(f(Design) with Design(with battery_size (i) $\in$ {300, ...,800}<br>   with engine_power(i) $\in$ {20,..., 100}<br>   with number_gears(i) $\in$ {1,2}<br>   with gear_ratio(i) $\in$ {6,..., 12}<br>   with upshift_threshold(i) $\in$ {350,...,450})) |
| 5 | Design(2) := (500 kg, 80 kW, 2, 8, 350 rad/s) |
| 6 | Objective(2) = (650 km, 8 s) |
| 7 | f: f(Design) := Objective(Design) based on...<br>(Design(i), Objective(i)) samples i $\in$ {1, 2}<br>optimize(f(Design) with Design(with battery_size (i) $\in$ {300, ...,800}<br>   with engine_power(i) $\in$ {20,..., 100}<br>   with number_gears(i) $\in$ {1,2}<br>   with gear_ratio(i) $\in$ {6,..., 12}<br>   with upshift_threshold(i) $\in$ {350,...,450})) |
| ... | ... |
| p-3 | Design(100) := (600 kg, 50 kW, 2, 10, 450 rad/s) |
| p-2 | Objective(2) = (780 km, 10 s) |
| p-1 | f: f(Design) := Objective(Design) based on...<br>(Design(i), Objective(i)) samples i $\in$ {1, ..., 100}<br>optimize(f(Design) with Design(with battery_size (i) $\in$ {300, ...,800}<br>   with engine_power(i) $\in$ {20,..., 100}<br>   with number_gears(i) $\in$ {1,2}<br>   with gear_ratio(i) $\in$ {6,..., 12}<br>   with upshift_threshold(i) $\in$ {350,...,450})) |
| p | Trade-offs: (range, acceleration_time), Sensitivities: range(battery), range(engine_power),... Pareto front 1<br>meta model: range vs. acceleration_time |

In this case, the layout parameters are battery size, engine power, number of gears, gear ratio and upshift threshold, while target parameters are total range of the vehicle and acceleration time. In the example according to Table 1, the abort criterion is reaching a predetermined maximum number of samples. Row 1 corresponds to step 110 of method 100 for processing input for defining layout space, target space, and constraints. Rows 2, 5,..., p-3 correspond to step 120 of determining sets of layout parameters, rows 3, 6,..., p-2 to step 130 of receiving objective responses, rows 4, 7,..., p-1 to step 150 of multi-objective optimization. The actions of these rows corresponding to step 150 of multi-objective optimization may be preceded by a step 140 of calculating and/or selecting a surrogate model, as previously described.

Below Table 2 reproduces code snippets for employing the method 100 in another exemplary application of designing a convolutional neural network for image recognition:

Table 2

| Step | Results |
|---|---|
| 1 | Design(i) = (input_features(i), encoding_layer(i), kernel_size(i))<br>    with input features(i) $\in$ {1,2, ...,20}<br>    with encoding_layers(i) $\in$ {2,4,8,16,32}<br>    with kernel_size(i) $\in$ {3 * 3, 5 * 5,7 * 7,9 * 9,11 * 11}<br>Objective(j) = (precision(j), recall(j), computing_time(j))<br>    with goal of max(precision(j) $\in$ (0,1))<br>    with goal of max(recall(j) $\in$ (0,1))<br>    with goal of $\min(\text{computing\_time}(j) \in \mathbb{R})$<br>Abort criterion: n_samples_max := 50 with i $\in$ {1,2,...,50} |
| 2 | Design(1) := (1, 2, 3*3)<br>Design(2) := (1, 4, 5*5)<br>...<br>Design(25) := (20, 16, 9*9) |
| 3 | Objective(1) = (0.9, 0.83, 37.3 ms)<br>Objective(2) = (0.81, 0.8, 19.2 ms)<br>...<br>Objective(25) = (0.85, 0.94, 43.0 ms) |
| 4 | f: f(Design) := Objective(Design) based on...<br>(Design(i), Objective(i)) samples i $\in$ {1, ... 25}<br>optimize(f(Design) with Design(input features(i) $\in$ {1,2,..., 20},<br>    encoding_layers(i) $\in$ {2,4,8,16,32},<br>    with kernel size(i) $\in$ {3 ∗ 3, 5 ∗ 5,7 ∗ 7,9 ∗ 9,11 ∗ 111})) |
| 5 | Design(26) := (6, 4, 3*3)<br>Design(27) := (6, 16, 5*5)<br>...<br>Design(50) := (7, 16, 3*3) |
| 6 | Objective(26) = (0.95, 0. 94, 37.2 ms)<br>Objective(27) = (0.99, 0.92, 14.7 ms)<br><br>Objective(50) = (0.81, 0.96, 13.2 ms) |
| 7 | f: f:= Objective(Design) based on...<br>(Design(i), Objective(i)) samples i $\in$ {1,... 50} |
| 8 | Trade-offs: (precision, recall), (precision, comp_time), (recall, com_time)<br>Sensitivities: precision(input_features), precision(encoding_layers),...<br>Pareto front 1 meta model: precision vs. recall<br>Pareto front 2 meta model: recall vs. comp_time |

Here, the design space comprises the number of encoding layers, the number of input features, and the kernel size of the convolutional neural network. Target parameters are precision, recall, and computing time of the convolutional neural network. A constraint may be set of allowing a specific maximum processing time. Row 1 corresponds to step 110 of method 100 for processing input for defining layout space, rows 2 and 5 to step 120 of determining sets of layout parameters, rows 3 and 6 to step 130 of receiving objective responses, rows 4 and 7 to step 150 of multi-objective optimization. Again, the actions of these rows corresponding to step 150 of multi-objective optimization may be preceded by a step 140 of calculating and/or selecting a surrogate model, as previously described.

In table 2, row 8 involves determining two Pareto fronts, a first Pareto front between precision and recall, which visualizes and quantifies that improved precision costs loss in recall, and a second Pareto front between recall and computing time which visualizes and quantifies that improved recall costs increased computing time.

In this example the sets of layout parameter values determined in step 120 comprise 25 design layouts, see rows 2 and 5 in Table 2. In this example, each of the 25 layout configurations defined in rows 3 and 5 may be run on a dedicated computing node so that the evaluation of the objective responses can be efficiently parallelized.

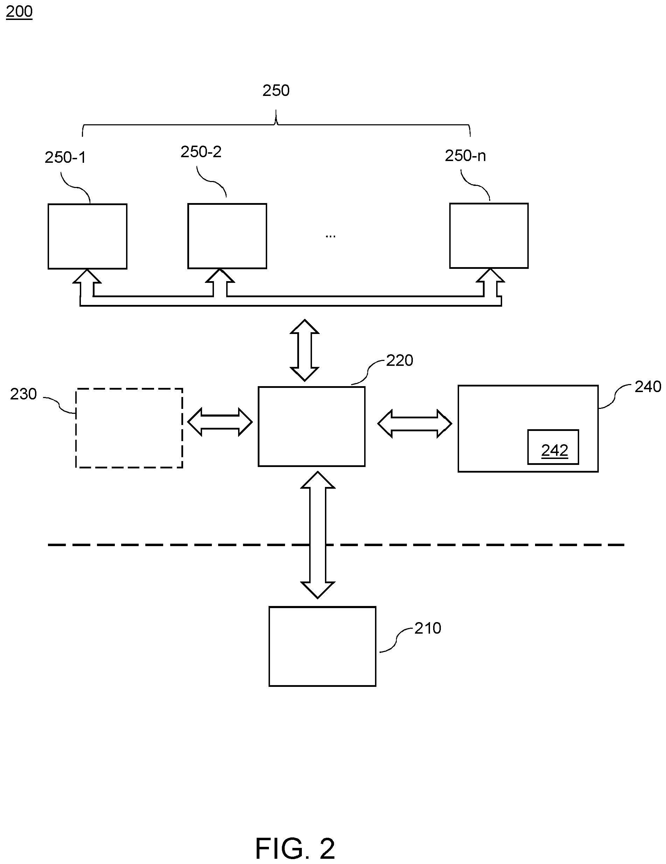

Figure 2 illustrates a block diagram of a system for Pareto-optimal design. System 200 comprises a central data handling module 220. Data handling module 220 is configured for managing exchange of data between the further system elements. System 200 comprises multi-objective optimization module 210 which is configured to sample a layout space of a technical system by sets of specified layout configurations to be modeled and evaluate objective results obtained via data handling module 220 from simulations of the specified layout configurations.

Multi-objective optimization module 210 may also be configured to build a meta model such as a surrogate model $\hat{s}$ described above, approximating a relation between target parameters and layout parameters. Employing the meta model allows gaining knowledge about the relation between target parameters and layout parameters even in non-simulated regions of the hyper space, such as to determine that particular non-simulated regions should be covered by additional simulations. Moreover, employing the surrogate model $\hat{s}$ allows visualizing Pareto-optimal layout configurations as a continuous Pareto front instead of only scattered points of individual Pareto-optimal layout configurations.

Data handling module 220 may be configured to forward the specified layout configurations to one or more system modelling modules (250-1, 250-2, ..., 250-n). System modelling modules (250-1, 250-2, ..., 250-n), which may be executed remote from multi-objective optimization module 210, are configured to receive the specified layout configurations and model, e.g. simulate, the technical system with the specified layout configurations to obtain objective responses. In embodiments, system modelling modules (250-1, 250-2, ..., 250-n) may run domain-specific or cross-domain simulations. Simulation results may be transferred to a data storage giving access to further processing.

System 200 further comprises decision management module 240 configured for rendering graphical user interface 242 that provides a human-machine interaction process for Pareto-optimal design.

Graphical user interface 242 forms a software tool for interacting with system 200. A user may employ graphical user interface 242 to submit the input data defining the layout space and the target space.

Further, system 200 may be configured for determining the quality of sampling of the layout space by the sets of layout parameters by a t-test. The graphical user interface 242 may instruct the user to refine input data when the sampling is not sufficient.

Further, system 200 may be configured for determining that the relationship between target indicators and design and use case variables is not significant, and inform the user accordingly via graphical user interface 242.

System 200 may also analyze whether the surrogate model $\hat{s}$ achieves a predetermined significance level, e.g. by employing an F-test. If the surrogate model $\hat{s}$ does not achieve the predetermined significance level, system 200 may adjust the parameter vector $\alpha$ or may employ graphical user interface 242 to instruct the user to select a different surrogate family $f_\alpha$. Graphical user interface 242 may further instruct the user to revisit the step of defining the layout space and the target space.

System 200 may optionally comprise a design space, target space and constraint definition module 230 configured for receiving input data relating to defining free variables of the layout space, the target space and constraints in target parameters and layout parameters, as described above.

In embodiments, multi-objective optimization module 210 may expose an optimization API to data handling module 220 which is running remote from the multi-objective optimization module 210. Hence, data handling module 220, decision management module 240, system modelling modules (250-1, 250-2, ..., 250-n), and design space, target space and constraint definition module 230 may be executed remote from multi-objective optimization module 210, e.g. at a client computing facility.

Data handling module 220 may provide a local data handler interacting with simulation software implemented on a remote computing system such as a client computing system. All simulations may be performed locally at the client system. Sets of layout parameters to be modelled are provided over a network from multi-objective optimization module 230 to the client system while objective responses are provided to multi-objective optimization module 210 via local data handler 220. This embodiment hence provides for improved information security minimizing risk of exposure of sensitive data.

In the example of Table 1 of designing a layout of an electric vehicle, the data handling module is tasked with rows 1 and p, the multi-objective optimization module is tasked with rows 2, 5, ..., p-and 4,7,...,p-1, while the system modelling module(s) are tasked with rows 3, 6,..., p-2.

In the example of Table 2 of designing a layout of a convolutional neural network, the data handling module is tasked with rows 1 and 8, the multi-objective optimization module is tasked with rows 2, 4, 5, and 7, while the system modelling module(s) are tasked with rows 3 and 6.

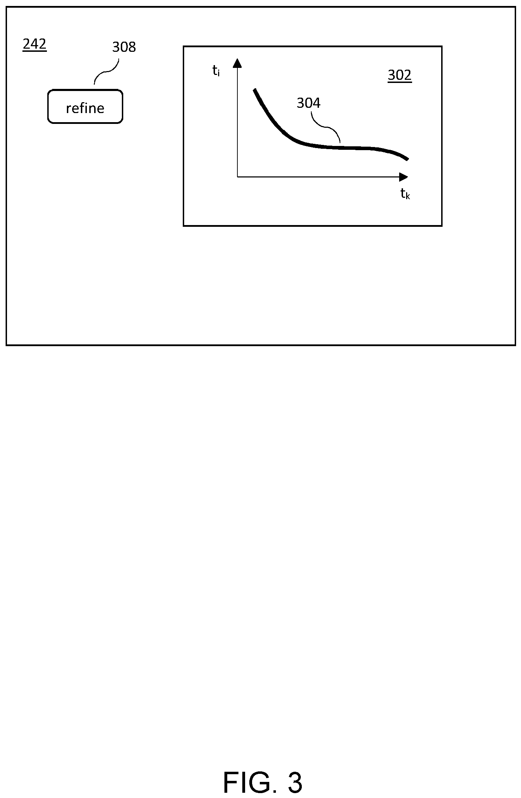

Figure 3 illustrates user interface 242 rendered by decision management module 240. User interface 242 provides graphical display 302 containing Pareto front 304 between target parameters $t_i$ and $t_k$,, supporting a user to select a specific system layout. Pareto front 304 may be determined based on a surrogate model as explained above. Graphical user interface 242 further contains button 308, which, upon actuation, initiates that system 200 repeats steps of method 100 explained above to refine the results displayed in graphical display 302.

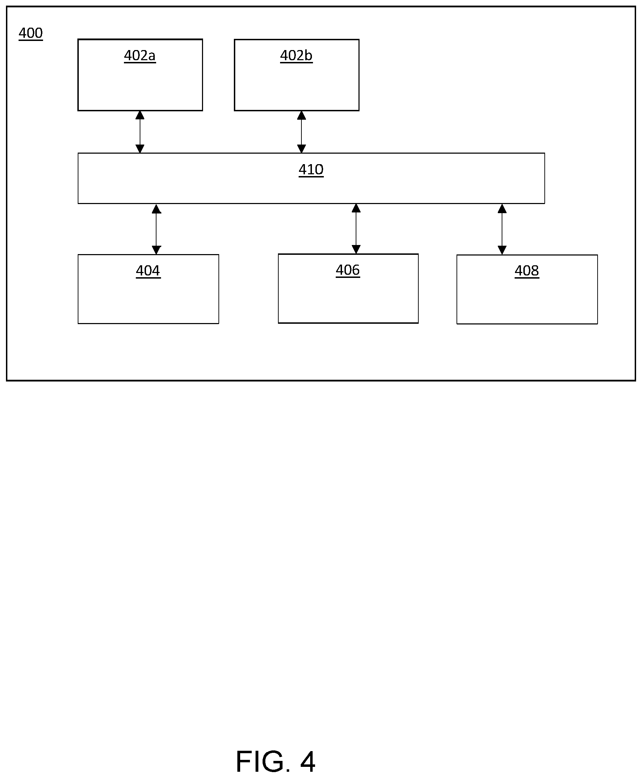

Figure 4 illustrates a computing device 400 that may be configured to execute steps of method 100 and/or implement one or more of the modules of system 200. Computing device 400 comprises processors 402a, 402b that communicate with system memory 404 over bus interface 410. Data Storage 406 may store computer-readable instructions for performing method 100 and/or implementing the module of system 200. Data Storage 406 may store objective results obtained by simulation of specified layout configurations. Network interface 408 may be employed for communication with other computing devices that implement other modules of system 200.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

The present disclosure hence relates to a guided human-machine interaction for selecting Pareto-optimal solutions. The present invention proposes an integrated analysis tool that allows systematically exploring the potential target achievements for all potential layouts of a complex technical system. When a system is optimized under multiple objectives, no single best system layout exists but only a set of a priori equivalent Pareto-optimal solutions exist. Therefore, designing a system under multi-objective optimization requires consideration of trade-offs between the priori Pareto-optimal solutions, which the present disclosure addresses by providing visualizations and quantifying the trade-offs between the objectives.

**Claims**

1. A computer-implemented-method for designing a Pareto-optimal layout of a system to be modeled, the method comprising:

   processing (110) input data relating to defining a layout space of layout parameters of a system to be modeled, a target space of target parameters of the system, and constraints in the layout parameters and the target parameters;
   determining (120) one or more sets of layout parameter values, each set specifying a layout configuration of the system to be modeled;
   receiving (130) objective responses for the system having layout configurations specified by the one or more sets of layout parameter values, wherein each objective response corresponds to a target parameter value achieved by the system when having a layout configuration specified by one of the sets of layout parameter values;
   applying (150) multi-objective optimization with respect to the target parameters to determine one or more further sets of layout parameter values;
   receiving (130) objective responses for the system having layout configurations specified by the one or more further sets of layout parameter values;
   repeating the steps of applying (150) multi-objective optimization to determine one or more consecutive further sets of layout parameter values and receiving (130) respective objective responses until an abort criterion is met;
   providing (160) a user interface for Pareto-optimal design of the system to be modeled, the user interface configured for selecting a specific layout configuration on basis of visualizing objective trade-offs inferred from the objective responses for the respective one or more sets of layout parameter values, wherein the trade-offs are inferred from the objective responses based on determining Pareto-optimal points.

2. The computer-implemented method of claim 1, further comprising building (140) a surrogate model that approximates a relation between the target parameter and the layout parameters, wherein determining the one or more consecutive further sets of layout parameter values is based on employing the surrogate model.

3. The computer-implemented method of claim 1 or claim 2, wherein determining (120) the sets of one or more layout parameter values is based on applying a space-filling algorithm.

4. The computer-implemented method of one of claims 1 to 3, wherein applying (150) multi-objective optimization to determine the one or more further sets and the consecutive further sets, respectively, of layout parameter values is based on employing all previously received objective responses.

5. The computer-implemented method of one of claims 1 to 4, wherein the layout space corresponds to a Cartesian product of a design space of design parameters and a use space of use case parameters, and wherein the design parameters and the use case parameters correspond to the layout parameters.

6. The computer-implemented method of one of claims 1 to 5, further comprising sending the sets of layout parameter values, the further sets of layout parameter values, and each of the consecutive further sets of layout parameter values to one or more remote system modelling modules for providing the respective objective responses.

7. The computer-implemented method of one of claims 1 to 6, further comprising determining that the abort criterion is met by determining that a predetermined level of convergence is reached.

8. The computer-implemented method of one of claims 1 to 7, further comprising performing a statistical test that a relation between the layout parameters and the target parameters inferred from the objective responses achieves a predetermined significance level, and wherein the user interface instructs the user to refine the input data if the relation does not achieve the predetermined significance level.

9. The computer-implemented method of one of claims 1 to 8, wherein the system to be modeled is a neural network for pattern recognition, wherein the layout parameters comprise a network depth, a number of input features, and a kernel size, and wherein the target parameters comprise a precision, a recall, and a computing time.

10. The computer-implemented method of one of claims 1 to 8, wherein the system to be modeled is an electric vehicle, wherein the layout parameters comprise a peak motor power, a battery capacity, a number of gears, a gear ratio, and an upshift threshold, and wherein the target parameters comprise a total range of the vehicle and an acceleration time of the vehicle.

11. The computer-implemented method of claim 2, wherein the surrogate model is employed to calculate a continuous Pareto front over the Pareto-optimal points, and wherein visualizing objective trade-offs comprises displaying the continuous Pareto front.

12. The computer-implemented method of claim 2 or claim 11, further comprising performing a statistical test that the surrogate model achieves a predetermined significance level, and wherein the user interface instructs the user to choose a different model family for building the surrogate model if it is determined that the predetermined significance level is not achieved.

13. The computer-implemented method of one of claims 1 to 12, wherein the user interface is configured for preparing output data reflecting layout parameter sensitivities based on analyzing a relation between the objective responses and the layout parameters.

14. The computer-implemented method of claim 13, wherein the sensitivities determined from the surrogate model capture correlation of several of the layout parameters with one of the target parameters.

15. A computing system for designing a Pareto-optimal layout of a system to be modeled, the computing system comprising:

a processor;

a data handling module (220) configured to handle data flow between modules;

one or more system modelling modules (250) configured to model a system with specified layout configurations, wherein each layout configuration is specified by a set of layout parameter values, wherein each system modelling module is configured to deliver objective responses for a layout configuration, wherein each objective response corresponds to a target parameter achieved by the system having the layout configuration specified by the set of layout parameter values;

a multi-objective optimization module (210) configured to employ the objective responses to determine further sets of layout parameter values to be modelled by the modelling modules;

a decision management module (240) including a graphical user interface (242) for Pareto-optimal design of the system, wherein the decision management module (240) is configured to:

visualize objective trade-offs (304) inferred from the objective responses for the layout parameters, wherein the trade-offs inferred are inferred from the objective responses based on determining Pareto-optimal points;

repeatedly present to the user, in each repetition, further sets of layout parameter values and corresponding objective results, wherein the further sets of layout parameter values are determined by the multi-objective optimization module, and the corresponding target parameters are delivered from the system modelling modules, until the user makes a selection of a specific layout configuration having a set of corresponding layout parameter values.

16. The system of claim 15, wherein each system modelling module (250) is configured to deliver the objective result for a layout configuration by simulating the system having a layout configuration specified by the set of one or more layout parameter values.

17. The system of claim 15 or claim 16, wherein the data handling module (220) is configured to retrieve the sets of layout parameters from the multi-objective optimization module (210) by employing an API exposed by the multi-objective optimization module.

18. The system of one of claims 15 to 17, wherein the one or more system modelling modules (250) comprise several system modelling modules (250-1, 250-2, ..., 250-n) configured to be executed in parallel.

19. The system of one of claims 15 to 18, further comprising a definition module configured to process user input related to definitions of a layout space of the system, a target space of the system, and constraints of the system, wherein the layout space comprises the layout parameters, the target space comprises the target parameters, and the constraints cover required limitations in the layout parameters and the target parameters.

20. A computer program product for designing a Pareto-optimal layout of a system to be modeled, comprising a non-transitory computer-readable medium encoded with program instructions which, when executed by at least one processor, cause a processor to perform operations according to the method of one of claims 1 to 14.

100

processing input for defining layout space, target space, and constraints ⟋ 110

determine sets of layout parameter values ⟋ 120

receive objective responses for layout parameter values ⟋ 130

calculate surrogate model ⟋ 140

multi-objective optimization ⟋ 150

provide user interface visualizing objective trade-offs ⟋ 160

FIG. 1

200

250

250-1    250-2    250-n

...

220

230    240

242

210

# FIG. 2

242

308

refine

302

$t_i$

304

$t_k$

FIG. 3

400

402a

402b

410

404

406

408

FIG. 4

Europäisches
Patentamt

European
Patent Office

Office européen
des brevets

# EUROPEAN SEARCH REPORT

Application Number

EP 21 17 6307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAMIDREZA ESKANDARI ET AL: "A fast Pareto genetic algorithm approach for solving expensive multiobjective optimization problems", JOURNAL OF HEURISTICS, KLUWER ACADEMIC PUBLISHERS, BO, vol. 14, no. 3, 28 September 2007 (2007-09-28), pages 203-241, XP019604849, ISSN: 1572-9397 * abstract * * page 204 - page 209 * * page 212 - page 215 * * figure 2 * | 1-20 | INV. G06F30/20 G06F30/15 G06F30/27 ADD. G06F111/06 |
| X | AHMAD FADZIL ET AL: "A genetic algorithm-based multi-objective optimization of an artificial neural network classifier for breast cancer diagnosis", NEURAL COMPUTING AND APPLICATIONS, [Online] vol. 23, no. 5, 1 October 2013 (2013-10-01), pages 1427-1435, XP055860091, London ISSN: 0941-0643, DOI: 10.1007/s00521-012-1092-1 Retrieved from the Internet: URL:https://link.springer.com/content/pdf/10.1007/s00521-012-1092-1.pdf> [retrieved on 2021-11-10] * abstract * * page 1428 - page 1434 * | 1-20 | |

TECHNICAL FIELDS
SEARCHED (IPC)

G06F

-/--

The present search report has been drawn up for all claims

| Place of search | Date of completion of the search | Examiner |
|---|---|---|
| Munich | 10 November 2021 | Radev, Boyan |

EPO FORM 1503 03.82 (P04C01)

page 1 of 2

Europäisches
Patentamt

European
Patent Office

Office européen
des brevets

## EUROPEAN SEARCH REPORT

Application Number

EP 21 17 6307

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUFU HUANG ET AL: "Multi-Objective Genetic Algorithm for Hybrid Electric Vehicle Parameter Optimization", INTELLIGENT ROBOTS AND SYSTEMS, 2006 IEEE/RSJ INTERNATIONAL CONFERENCE ON, IEEE, PI, 1 October 2006 (2006-10-01), pages 5177-5182, XP031006956, ISBN: 978-1-4244-0258-8 * abstract * * page 5177 - page 5181 * ----- | 1-20 | |

TECHNICAL FIELDS
SEARCHED (IPC)

The present search report has been drawn up for all claims

| Place of search | Date of completion of the search | Examiner |
|---|---|---|
| Munich | 10 November 2021 | Radev, Boyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)